# EUROPÄISCHE PATENTANMELDUNG

(11) **EP 3 967 466 A1**
(43) Veröffentlichungstag der Anmeldung: **16.03.2022**
(21) Anmeldenummer: 21203493.8
(22) Anmeldetag: 18.11.2015
(51) Int. Cl.: B27B 31/00, B27B 5/065, B25J 9/00, B25J 15/06

(54) **PLATTENAUFTEILANLAGE ZUM AUFTEILEN VON PLATTENFÖRMIGEN WERKSTÜCKEN, SOWIE VERFAHREN ZU DEREN BETRIEB**

(30) Priorität: 05.12.2014 DE 102014225073
(62) Teilanmeldung aus: 15801711.1
(71) Anmelder: HOMAG Plattenaufteiltechnik GmbH, 75365 Calw (DE)
(72) Erfinder: Elhaus, Uwe, 75365 Calw (DE); Zimbakov, Darko, 71155 Altdorf (DE); Martynenko, Sergey, 71083 Herrenberg (DE); Kress, Martin, 75382 Althengstett (DE); Dittus, Jens, 72218 Wildberg (DE); Maiwald, Wolfgang, 75365 Calw (DE); Kussmaul, Volker, 71149 Bondorf (DE); Kempf, Martin, 72202 Nagold (DE); Schürer, Marko, 75389 Neuweiler-Agenbach (DE); Pfrommer, Achim, 75387 Neubulach-Liebelsberg (DE)
(74) Vertreter: DREISS Patentanwälte PartG mbB

(57) **Zusammenfassung**

Die Erfindung betrifft eine Plattenaufteilanlage (10) zum Aufteilen von plattenförmigen Werkstücken (56), mit einem Zuführtisch (12), einer Aufteileinrichtung mit einer Aufteillinie (14), einem Entnahmetisch (16) und mindestens einer ersten Fördereinrichtung (18), mit der ein auf dem Zuführtisch (12) liegendes Werkstück (56) in Richtung zur Aufteillinie (14) hin bewegt werden kann. Es wird vorgeschlagen, dass sie mindestens eine zweite Fördereinrichtung aufweist, die einen Roboter (24) umfasst, der eine Basis (26) und einen Arbeitsbereich (46) aufweist, welcher in einer Draufsicht mindestens zum Teil einen Bereich des Entnahmetisches (16) überdeckt.

## Beschreibung

Die Erfindung betrifft eine Plattenaufteilanlage zum Aufteilen von plattenförmigen Werkstücken nach dem Oberbegriff des Anspruchs 1, sowie ein Verfahren zum Betreiben einer solchen Plattenaufteilanlage nach dem Oberbegriff des nebengeordneten Patentanspruchs.

Derartige Plattenaufteilanlagen sind sowohl vom Markt her als auch aus der DE 10 2008 034 050 A1 und aus der DE 10 2009 038 120 A1 bekannt. Diese Plattenaufteilanlagen dienen zum Aufteilen von großformatigen plattenförmigen Werkstücken, wie sie beispielsweise für die Möbelindustrie verwendet werden. Zum Betrieb dieser Plattenaufteilanlagen ist mindestens eine Bedienperson erforderlich, die die nach einem ersten Verfahrensschritt aufgeteilten Werkstücke vom Entnahmetisch entnimmt und beispielsweise einer Abstapelung zuführt, und die andere aufgeteilte Werkstücke vom Entnahmetisch über die Aufteillinie hinweg zurück zum Zuführtisch schiebt, wo das Werkstück wieder von einem Programmschieber einer ersten Fördereinrichtung ergriffen und einem neuen Aufteilvorgang zugeführt werden kann.

Dabei ist es bekannt, ein Werkstück durch insgesamt zwei oder mehr Aufteilvorgänge aufzuteilen. Der erste Aufteilvorgang wird auch als Längsschnitt, der zweite Aufteilvorgang als Querschnitt, und der dritte Aufteilvorgang als Nachschnitt bezeichnet.

Die EP 0 130 309 B1 beschreibt eine Holzbearbeitungsmaschine mit einem Maschinentisch, an dessen Rand ein Ständer mit einer Bandsäge angeordnet ist. Am gegenüberliegenden Rand des Maschinentisches ist eine als "Drehachsen-Kombination" bezeichnete Einrichtung zu sehen. Die EP 1 208 933 A1 offenbart zwei Roboter, deren Arbeitsbereich einen Bereich oberhalb von Rollenbahnen, mit denen bearbeitete Werkstücke abgeführt werden, angeordnet ist. Die DE 10 2004 040 963 A1 beschreibt eine Plattenaufteilanlage, bei der Werkstücke mittels einer manuell bedienbaren Handhabungseinrichtung "von vorne" auf einen Entnahmetisch gelegt werden können.

Aufgabe der vorliegenden Erfindung ist es, eine Plattenaufteilanlage der eingangs genannten Art so weiterzubilden, dass sie besonders wirtschaftlich arbeitet.

Diese Aufgabe wird durch eine Plattenaufteilanlage mit den Merkmalen des Anspruchs 1 sowie durch ein Verfahren mit den Merkmalen des nebengeordneten Patentanspruchs gelöst.

Die erfindungsgemäße Plattenaufteilanlage hat den Vorteil, dass sie vollautomatisch arbeiten kann, wodurch eine sehr hohe Wirtschaftlichkeit erreicht wird. Dabei ist sie jedoch relativ preiswert und einfach aufgebaut. Dies gilt insbesondere dann, wenn die Basis des Roboters, in Förderrichtung der ersten Fördereinrichtung gesehen, seitlich von der Aufteillinie und mindestens in der Nähe zu der Aufteillinie und/oder einem Winkellineal angeordnet ist, da dies für den eingesetzten Roboter eine Position ist, die den Einsatz eines vergleichsweise preisgünstigen kleinen Roboters gestattet, der mit seinem Arbeitsbereich (unter dem Arbeitsbereich wird jener Bereich verstanden, in dem dort liegende Werkstücke vom Roboter ergriffen und/oder abgelegt und/oder transportiert werden können) gleichwohl alle notwendigen Bereiche der Plattenaufteilanlage abdeckt. Hierzu gehören der Entnahmetisch, aber auch ein Bereich, der eine Zuführung des vom Roboter bewegten Werkstücks zur Aufteileinrichtung gestattet. Ein solcher Bereich ist der Zuführtisch, aber auch ein seitlich vom Zuführtisch liegender Bereich, der als Zwischenablage dient, von dem aus das Werkstück dann zum Zuführtisch gefördert wird. Dabei versteht sich, dass der Entnahmetisch nicht zwingend nur ein unmittelbar - in der ersten Förderrichtung gesehen - hinter der Aufteillinie liegender Bereich ist, sondern beispielsweise auch ein seitlich hiervon angeordneter Bereich sein kann, auf den das aufgeteilte Werkstück beispielsweise mittels einer separaten Fördereinrichtung gelangt.

Auf diese Weise kann ein durch einen ersten Aufteilvorgang (bspw. Längsschnitt) abgetrenntes Werkstück vom Roboter vom Entnahmetisch entnommen werden, vom Roboter zurück zum Zuführtisch oder zu dem seitlich vom Zuführtisch liegenden Bereich transportiert werden, von dort einem zweiten Aufteilvorgang (bspw. Querschnitt) zugeführt werden, das durch diesen abgetrennte Werkstück wieder vom Roboter entnommen und wieder dem Zuführtisch oder dem seitlich vom Zuführtisch liegenden Bereich zugeführt werden, von dort einem dritten Aufteilvorgang (bspw. Nachschnitt) zugeführt werden, usw., bis das fertige Werkstück schließlich vom Roboter vom Entnahmetisch entnommen und beispielsweise zu einer Abtransporteinrichtung, einem Abstapelplatz oder einer anderen weiterführenden Einrichtung bewegt wird. Mit dem erfindungsgemäß vorgesehenen Roboter und seiner erfindungsgemäßen Platzierung an der Plattenaufteilanlage relativ zur Aufteillinie wird also ein äußerst flexibel arbeitendes System geschaffen.

Eine Weiterbildung der erfindungsgemäßen Plattenaufteilanlage zeichnet sich dadurch aus, dass die Basis des Roboters in der Draufsicht in Verlängerung zur Aufteillinie angeordnet ist. Auf diese Weise ist der Arbeitsbereich des Roboters optimal einerseits relativ zum Entnahmetisch und andererseits relativ zum Zuführtisch und/oder zu dem seitlich vom Zuführtisch gelegenen Bereich platziert.

Vorteilhaft ist es ferner, wenn ein Förderbereich des Roboters auch oberhalb von der Aufteillinie liegt. Mit anderen Worten: der Roboter kann ein Werkstück nicht nur seitlich an der Aufteillinie vorbei sondern auch über diese hinweg heben. Beispielsweise dann, wenn oberhalb von der Aufteillinie ein Druckbalken vorhanden ist, der während eines Aufteilvorgangs das aufzuteilende Werkstück zwischen dem Druckbalken und einem Maschinentisch verklemmt, bedeutet dies, dass der Roboter das Werkstück über den Druckbalken hinweg beispielsweise vom Entnahmetisch zurück zum Zuführtisch oder zu dem seitlich vom Zuführtisch gelegenen Bereich transportieren kann. Dies kann die für den Transport erforderliche Bewegung des Roboters minimieren, wodurch Zeit und Energie gespart werden kann.

Vorgeschlagen wird ferner, dass die Basis des Roboters oberhalb von einem Bahnhof der Aufteileinrichtung angeordnet ist. Dem liegt Folgendes zu Grunde: die Aufteileinrichtung umfasst meistens einen Wagen, beispielsweise einen Sägewagen, der unterhalb von der Aufteillinie längs zu dieser bewegbar ist und der das Aufteilwerkzeug, beispielsweise eine Säge oder mehrere Sägen, trägt. In bestimmten Betriebszuständen der Plattenaufteilanlage muss dieser Wagen beispielsweise nach einem Winkellineal (einer seitlichen Einrichtung zum Ausrichten und Anlegen eines Werkstücks) seitlich von der Aufteillinie in einem "Bahnhof" gebremst werden. Der Grund hierfür ist, dass der Sägewagen längs der gesamten Länge der Aufteillinie, also beispielsweise bis zum Winkellineal, mit maximaler Geschwindigkeit bewegt werden soll und daher eine seitliche Bremsstrecke notwendig ist. Erfindungsgemäß wird nun der oberhalb von diesem Bahnhof gelegene Bereich für die Positionierung des Roboters genutzt, wodurch dieser - wenn man den zum Winkellineal benachbarten Bahnhof nimmt - maximal nahe an der Aufteillinie und am Winkellineal angeordnet ist. Der Grund hierfür ist, dass das Werkstück während der Bearbeitung am Winkellineal anliegt und somit der Roboter so nah wie möglich zum Werkstück angeordnet ist. Dies hat zur Folge, dass der Arbeitsbereich des Roboters den Entnahmetisch und den Zuführtisch bzw. den seitlich vom Zuführtisch gelegenen Bereich besonders gut überdeckt. Grundsätzlich möglich ist aber auch eine Anordnung des Roboters oberhalb von jenem Bahnhof, der am vom Winkellineal entfernten Ende der Aufteillinie angeordnet ist. In diesem Fall wird eben ein Roboter mit einem größeren Arbeitsbereich benötigt.

Eine weitere Ausgestaltung der erfindungsgemäßen Plattenaufteilanlage sieht vor, dass die Basis des Roboters eine Ständerung aufweist, die mindestens von der Aufteileinrichtung entkoppelt ist. Hierdurch wird verhindert, dass Vibrationen, die durch den Betrieb des Roboters hervorgerufen werden, auf die Aufteileinrichtung und gegebenenfalls auch auf andere Bereiche übertragen werden. Durch diese Weiterbildung wird also die Aufteilgenauigkeit verbessert.

Möglich ist auch, dass der Roboter einen Roboterarm und eine an dessen Ende angeordnete plattenförmige, im Wesentlichen horizontale Saug-Greifeinrichtung aufweist, welche ein plattenförmiges Werkstück an seiner Oberseite greifen kann. Dies ist eine einfach zu realisierende und gleichzeitig außerordentlich zuverlässige Möglichkeit, um plattenförmige Werkstücke zu transportieren, ohne dass die Gefahr einer Beschädigung des plattenförmigen Werkstücks besteht. Es versteht sich, dass mit einer solchen Saug-Greifeinrichtung im allgemeinen nur ein einzelnes Werkstück transportiert werden kann. Die vorliegende Plattenaufteilanlage ist in diesem Fall also nur zum Aufteilen von einzelnen Werkstücken und nicht von Stapeln von Werkstücken geeignet. Es handelt sich also um eine Einzelplatten-Aufteilanlage bzw. - wenn die Aufteileinrichtung eine Säge ist - eine Einzelplattensäge.

In Weiterbildung hierzu wird vorgeschlagen, dass die SaugGreifeinrichtung exzentrisch an dem Roboterarm angeordnet ist und/oder dass Saugeinrichtungen asymmetrisch an der SaugGreifeinrichtung verteilt angeordnet sind. Auf diese Weise wird der Durchmesser des Arbeitsbereichs vergrößert, ohne dass ein längerer Roboterarm erforderlich ist bzw. es wird ermöglicht, dass von der Saug-Greifeinrichtung auch Werkstücke gegriffen werden können, die deutlich kleiner sind als die plattenförmige Saug-Greifeinrichtung.

Besonders vorteilhaft ist es ferner, wenn die SaugGreifeinrichtung gegenüber dem Roboterarm um eine vertikale Achse drehbar ist. Damit ist eine exakte und gewünschte Ausrichtung der vom Roboter bewegten Werkstücke möglich, so das zusätzliche Ausrichtmittel nicht erforderlich sind oder zumindest relativ einfach aufgebaut sein können.

Ebenfalls zur Optimierung bzw. Maximierung der Größe des Arbeitsbereichs dient es, wenn der Roboter einen Roboterarm aufweist, der mit der Basis an einer Verbindungsstelle gelenkig verbunden ist, wobei die Verbindungsstelle in etwa auf gleicher Höhe oder etwas höher liegt wie eine Oberseite des Zuführtisches und/oder eine Oberseite des Entnahmetisches.

Eine weitere vorteilhafte Ausgestaltung der Plattenaufteilanlage zeichnet sich dadurch aus, dass die Plattenaufteilanlage eine Puffereinrichtung umfasst, die seitlich vom Zuführtisch angeordnet ist, und dass sie eine dritte Fördereinrichtung aufweist, die der Puffereinrichtung zugeordnet ist, deren Förderrichtung orthogonal zur Förderrichtung der ersten Fördereinrichtung liegt derart, dass ein Werkstück von der Puffereinrichtung auf den Zuführtisch gefördert werden kann, wobei die Puffereinrichtung mindestens zum Teil im Arbeitsbereich des Roboters liegt. Eine solche Puffereinrichtung liegt somit beispielsweise in dem eingangs erwähnten seitlich vom Zuführtisch gelegenen Bereich, der mindestens zum Teil vom Arbeitsbereich des Roboters überdeckt wird.

Auf einer solchen Puffereinrichtung können Werkstücke zwischengelagert werden, wodurch die Aufteil-Reihenfolge verändert werden kann. Beispielsweise kann ein abgetrenntes Werkstück zwischengelagert werden, so dass ein nachfolgend abgetrenntes Werkstück direkt auf den Zuführtisch gelegt werden kann, und das eigentlich zuvor aufgeteilte Werkstück dann anschließend aufgeteilt werden kann. Die Anordnung seitlich vom Zuführtisch und die Förderrichtung orthogonal zur Förderrichtung der ersten Fördereinrichtung führen zu einer optimalen Ausnutzung des vorhandenen Platzes.

Auch wird auf diese Weise erreicht, dass ein möglichst großer Teil der Puffereinrichtung im Arbeitsbereich des Roboters liegt. Vorteilhafterweise wird die Puffereinrichtung durch die dritte Fördereinrichtung gebildet. Dies gilt nicht nur, aber vor allem auch dann, wenn sie eine Mehrzahl von Fördersegmenten umfasst, insbesondere einen Riemenförderer, eine Rollenbahn, ein Transportband, einen Schieber, und/oder einen Kettenförderer.

Die Flexibilität der Plattenaufteilanlage wird nochmals verbessert, wenn die dritte Fördereinrichtung so ausgebildet ist, dass ein auf der Puffereinrichtung liegendes Werkstück mindestens auch vom Zuführtisch weggefördert werden kann, und/oder sie insbesondere sowohl im Bereich der Puffereinrichtung als auch im Bereich des Zuführtisches angeordnet ist. Ein vom Roboter auf der Puffereinrichtung abgelegtes Werkstück kann somit von dem Zuführtisch weg und aus dem Arbeitsbereich des Roboters herausbewegt werden, so dass der Roboter ein nachfolgendes Werkstück an die freigewordene Stelle ablegen kann.

In dem die dritte Fördereinrichtung sowohl im Bereich des Zuführtisches als auch im Bereich der Puffereinrichtung angeordnet ist, können die auf der Puffereinrichtung abgelegten Werkstücke problemlos auf den Zuführtisch transportiert werden, ohne dass eine weitere Fördereinrichtung oder beispielsweise der Einsatz des Roboters benötigt wird. Der Roboter kann somit einer anderen Tätigkeit nachgehen, während die dritte Fördereinrichtung ein Werkstück vom Puffertisch auf den Zuführtisch transportiert. Damit dies möglich ist, kann vorgesehen sein, dass die dritte Fördereinrichtung eine Mehrzahl von Fördereinrichtungssegmenten umfasst, wobei ein Segment beispielsweise im Bereich des Zuführtisches und ein anderes Segment beispielsweise außerhalb vom Zuführtisch angeordnet ist.

Eine einfach zu realisierende Variante einer solchen dritten Fördereinrichtung ist ein Riemenförderer. Damit dieser ein Werkstück bis auf den Zuführtisch fördern kann, kann entweder der Riemenförderer relativ zum Zuführtisch oder der Zuführtisch relativ zum Riemenförderer in der Höhe verstellbar sein.

Eine nochmalige Erhöhung der Flexibilität der Plattenaufteilanlage wird erreicht, wenn diese eine weitere Puffereinrichtung, nämlich ein Zwischenlager umfasst, welches seitlich vom Roboter ungefähr in Verlängerung der Aufteillinie und mindestens zum Teil im Arbeitsbereich des Roboters angeordnet ist. Auch wird der seitlich vom Roboter vorhandene Bereich einer Nutzung, nämlich der Nutzung als Zwischenlager zugeführt, wodurch die Anlageneffizienz nochmals verbessert wird. Alternativ oder zusätzlich kann die Plattenaufteilanlage auch ein Zwischenlager umfassen, welches oberhalb von der Aufteillinie angeordnet ist und sich vorzugsweise in etwa in Längsrichtung der Aufteillinie erstreckt. Hierdurch kann der für die Aufstellung der Plattenaufteilanlage benötigte Platz reduziert werden.

Die erfindungsgemäße Plattenaufteilanlage kann ferner eine Abtransporteinrichtung umfassen, die mindestens zum Teil im Arbeitsbereich des Roboters liegt und mit der ein fertiges Werkstück abtransportiert werden kann. Bei dieser Abtransporteinrichtung kann es sich beispielsweise um einen Riemenförderer oder einen Rollenförderer handeln, oder um einen weiteren Roboter. Die Abtransporteinrichtung kann auch einfach eine (ggf. fahrbare) Palette oder ein Stapler sein. Die Abtransporteinrichtung kann beispielsweise zu einem Abstapelplatz oder zu einer weiteren Bearbeitungseinrichtung führen. Damit wird ein wirklich vollautomatischer Betrieb der Plattenaufteilanlage realisiert.

Die Plattenaufteilanlage kann eine weitere Bearbeitungseinrichtung, insbesondere eine Etikettiereinrichtung, aufweisen, wodurch die Anlageneffizienz nochmals verbessert wird. Diese kann im Bereich einer Abtransporteinrichtung, einer Puffereinrichtung, insbesondere einer Puffereinrichtung mit einer ihr zugeordneten Fördereinrichtung, des Zuführtisches, oder des Entnahmetisches angeordnet sein.

Ferner wird vorgeschlagen, dass die Plattenaufteilanlage eine Ausschubvorrichtung umfasst, mit der ein aufgeteiltes Werkstück von der Aufteillinie auf den Entnahmetisch und/oder ein Abfallstück in einen Entsorgungsbereich geschoben werden kann. Dies hat den Vorteil, dass die erste Fördereinrichtung beispielsweise zurückfahren und ein weiteres Werkstück holen kann, während ein aufgeteiltes Werkstück, welches gegebenenfalls besonders schmal sein kann, auf den Entnahmetisch von der Ausschubvorrichtung geschoben wird. Letztlich dient dies also ebenfalls zur Erhöhung der Anlageneffizienz.

Möglich ist ferner, dass die Plattenaufteilanlage eine Erfassungseinrichtung, insbesondere eine Bilderfassungseinrichtung, zur Erfassung der Position und/oder Lage eines Werkstücks mindestens innerhalb eines Bereichs der Plattenaufteilanlage umfasst. Dies ermöglicht es, dass mindestens eine der Fördereinrichtungen und/oder der Roboter abhängig von der erfassten Position und/oder Lage angesteuert werden/wird, was die Taktgeschwindigkeit erhöhen kann.

Nachfolgend wird ein Beispiel der Erfindung unter Bezugnahme auf die beiliegende Zeichnung erläutert. In der Zeichnung zeigen:
Figur 1 eine perspektivische Darstellung einer Plattenaufteilanlage mit einem Zuführtisch, einer Aufteileinrichtung, einem Entnahmetisch, einem Roboter, einer Puffereinrichtung, einem Zwischenlager und einer Abtransporteinrichtung;
Figur 2 eine Draufsicht auf die Plattenaufteilanlage von Figur 1;
Figur 3 eine Ansicht von vorne auf die Plattenaufteilanlage von Figur 1;
Figur 4 eine Ansicht von der Seite auf die Plattenaufteilanlage von Figur 1;
Figur 5 eine perspektivische Darstellung eines Maschinentischs und einer Ständerung des Roboters der Plattenaufteilanlage von Figur 1;
Figuren 6-8 eine schematische Seitenansicht auf eine Ausschubvorrichtung der Plattenaufteilanlage von Figur 1 in unterschiedlichen Betriebszuständen; und
Figuren 9-18 eine schematische Draufsicht auf die Plattenaufteilanlage von Figur 1 zu unterschiedlichen Zeitpunkten während eines Verfahrens zum Aufteilen eines plattenförmigen Werkstücks.

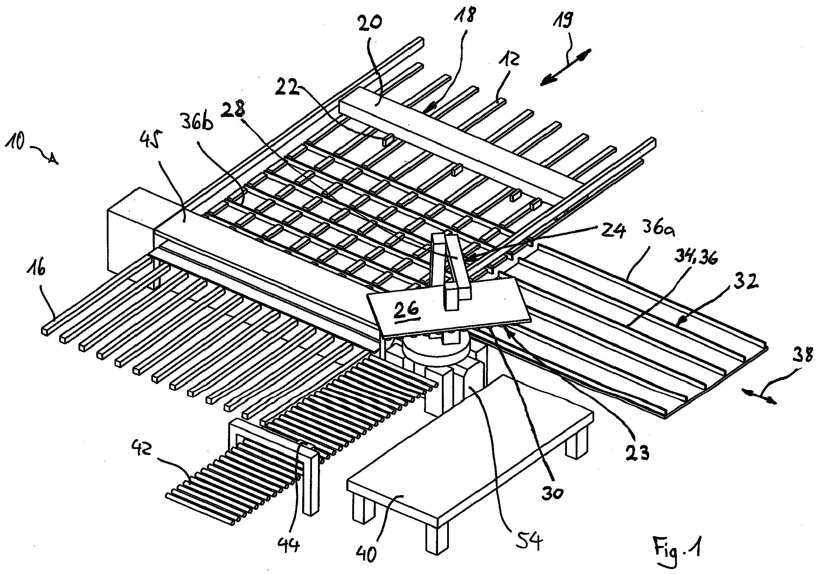

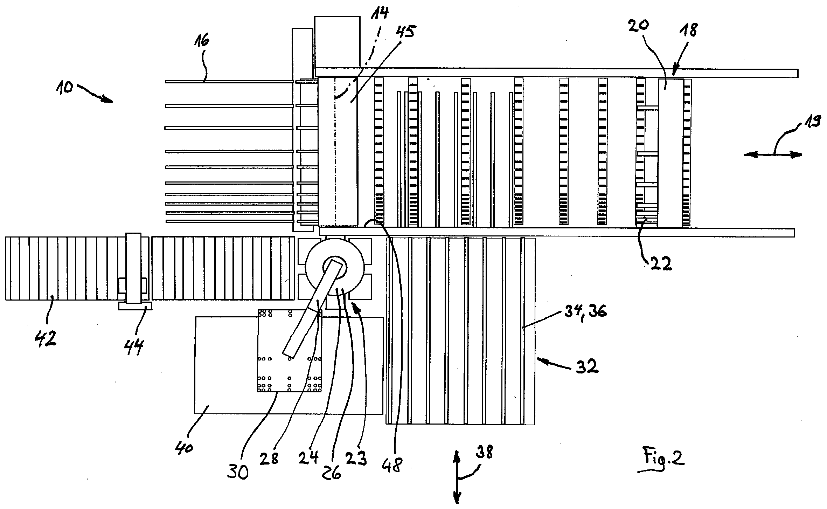

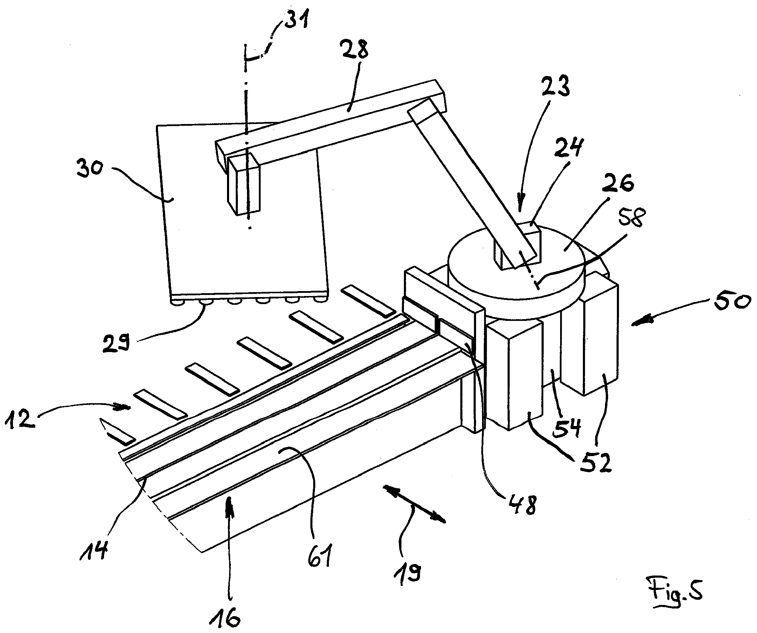

In allen Figuren trägt eine Plattenaufteilanlage insgesamt das Bezugszeichen 10. Sie umfasst einen aus mehreren Rollenschienen gebildeten Zuführtisch 12, eine vorliegend als Säge ausgebildete Aufteileinrichtung (nicht sichtbar) mit einer Aufteillinie 14 ("Sägelinie"), und einen ebenfalls aus mehreren Rollenschienen gebildeten Entnahmetisch 16. Die Aufteillinie 14 ist in Figur 1 verdeckt und daher nicht sichtbar. Sie ist beispielsweise in Figur 2 durch eine strichpunktierte Linie dargestellt sowie in Figur 5 sichtbar, da dort jene Teile, die die Aufteillinie 14 in Figur 1 verdecken, nicht gezeichnet sind.

Zu der Plattenaufteilanlage 10 gehört ferner eine erste Fördereinrichtung 18, die vorliegend einen an seitlichen Schienen (ohne Bezugszeichen) verfahrbar gehaltenen Programmschieber 20 umfasst, an dem eine Mehrzahl von Spannzangen 22 befestigt ist, von denen aus Gründen der Übersichtlichkeit jedoch nur eine mit einem Bezugszeichen versehen ist. Mittels der ersten Fördereinrichtung 18 kann ein auf dem Zuführtisch 12 liegendes Werkstück in Richtung zur Aufteillinie 14 und auch entgegen dieser Richtung längs zu einer durch einen Doppelpfeil bezeichneten Förderrichtung 19 in an sich bekannter Weise bewegt werden.

Nicht dargestellt, aber ebenfalls vorhanden ist eine Ausrichteinrichtung, mit der ein auf dem Zuführtisch 12 liegendes Werkstück in Richtung der Förderrichtung 19 und seitlich hierzu ausgerichtet werden kann. Zu dieser Ausrichteinrichtung gehören nach oben ausfahrbare Ausrichtanschläge, die parallel zur Aufteillinie 14 angeordnet sind und eine Ausrichtung des Werkstücks in Förderrichtung 19 ermöglichen. Ferner gehört zu der Ausrichteinrichtung ein ebenfalls vertikal nach oben ausfahrbarer Ausrichtschieber, mit dem ein auf dem Zuführtisch 12 liegendes Werkstück gegen ein seitliches Winkellineal gedrückt werden kann, wodurch es zur Seite hin ausgerichtet wird. Auf dieses Winkellineal wird später nochmals Bezug genommen werden.

Die Plattenaufteilanlage 10 umfasst ferner eine zweite Fördereinrichtung 23, vorliegend einen Roboter 24 mit einer Basis 26, einem an der Basis 26 gelenkig befestigten, gegenüber der Basis 26 um eine vertikale Achse (ohne Bezugszeichen) drehbaren Roboterarm 28, der zwei relativ zueinander um eine horizontale Achse (ohne Bezugszeichen) schwenkbare Abschnitte umfasst, und einer am abragenden Ende des Roboterarms 28 befestigten plattenförmigen und im Wesentlichen horizontalen Saug-Greifeinrichtung 30. Die SaugGreifeinrichtung 30 ist relativ zum Roboterarm 28 ebenfalls um eine vertikale Achse 31 drehbar gelagert. Bei dem in der vorliegenden Ausführungsform gezeigten Roboter 24 handelt es sich um einen relativ einfachen Roboter. Grundsätzlich denkbar ist natürlich auch die Verwendung eines anderen Roboters, der mehrere Bewegung- und Schwenkachsen aufweist.

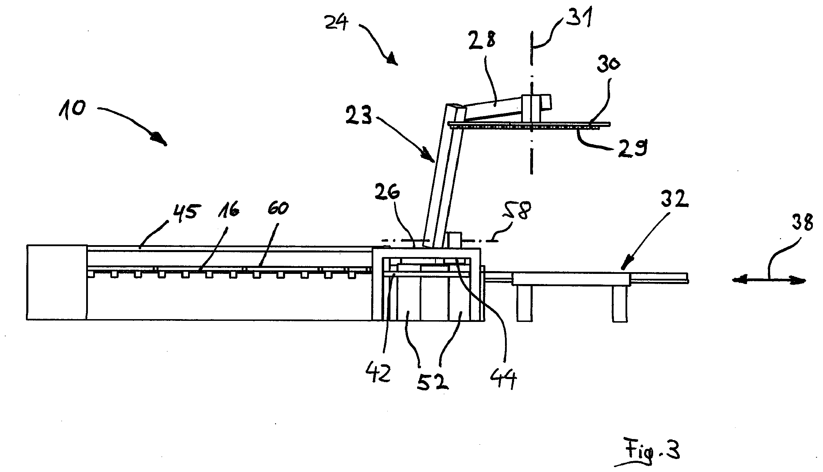

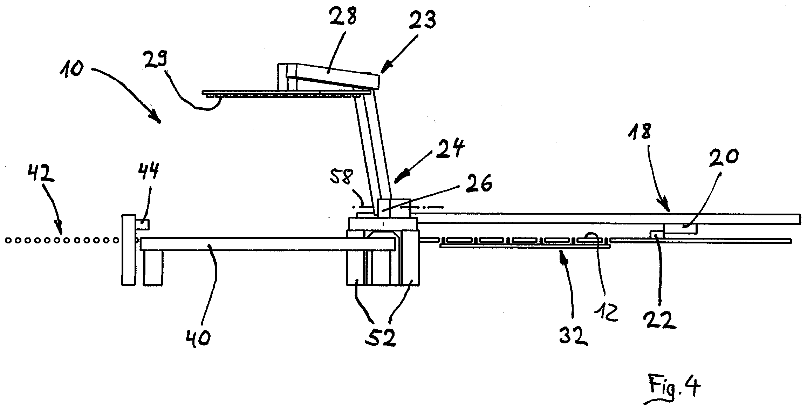

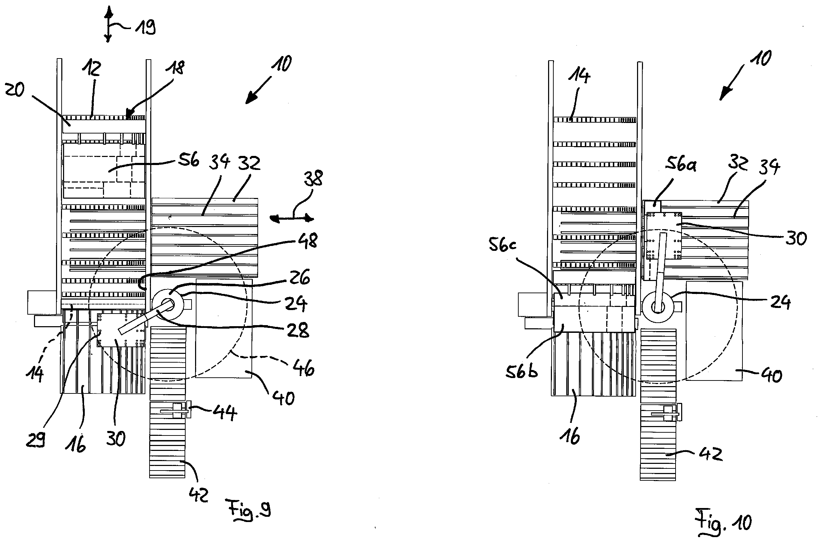

Die Saug-Greifeinrichtung 30 ist als plattenförmige Fachwerkkonstruktion ausgebildet und weist auf ihrer Unterseite eine Vielzahl von einzelnen pneumatischen Saugglocken auf, die lediglich in den Figuren 3, 4 und 5 sichtbar sind und dort das Bezugszeichen 29 tragen und beispielsweise in den Figuren 9 bis 18 als kleine Kreise sichtbar sind. Dort erkennt man, dass diese Saugglocken 29 nicht symmetrisch über die rechteckige Grundfläche der SaugGreifeinrichtung 30 verteilt sind. Hierdurch wird ermöglicht, dass durch die Saug-Greifeinrichtung 30 auch kleine und schmale Werkstücke, die kleiner sind als die Gesamterstreckung der Saug-Greifeinrichtung 30, transportiert werden können. Bei einer nicht dargestellten Ausführungsform der-Sauggreifeinrichtung sind die Saugglocken symmetrisch und gleichförmig verteilt. Denkbar ist auch eine Ausführung, bei der eine Saugleiste und/oder ein Saugkasten vorhanden ist.

Bei einer nicht gezeigten Ausführungsform ist die plattenförmige Saug-Greifeinrichtung nicht zentrisch mit dem Ende des Roboterarms verbunden, sondern exzentrisch. Hierdurch kann die Reichweite des Roboters, also die Größe des Arbeitsbereichs, vergrößert werden.

Weiterhin umfasst die Plattenaufteilanlage 10 eine Puffereinrichtung in Form eines Puffertisches 32. Dieser ist seitlich vom Zuführtisch 12 angeordnet. Dem Puffertisch 32 ist eine dritte Fördereinrichtung 34 in Form eines Riemenförderers 36 zugeordnet, dessen Förderrichtung durch einen Doppelpfeil 38 bezeichnet ist. Man erkennt ohne weiteres, dass die Förderrichtung 38 des Riemenförderers 36 bei der hier gezeigten Ausführungsform orthogonal zur Förderrichtung 19 der ersten Fördereinrichtung 18 angeordnet ist. Bei nicht gezeigten Ausführungsformen ist auch ein anderer Winkel zwischen den beiden Förderrichtungen denkbar.

Die dritte Fördereinrichtung 34 ist jedoch nicht nur im Bereich des Puffertisches 32 angeordnet, sondern erstreckt sich bis in den Zuführtisch 12 hinein. Zur Kenntlichmachung ist in den Figuren 1 und 2 jener Bereich bzw. jenes Segment des Riemenförderers 36, der bzw. das im Bereich des Puffertisches 32 liegt, mit dem Index a und jener Bereich bzw. jenes Segment, der bzw. das im Bereich des Zuführtisches 12 liegt, mit dem Index b bezeichnet. Auf diese Weise kann mittels der dritten Fördereinrichtung 34 ein Werkstück vom Puffertisch 32 bis auf den Zuführtisch 12 transportiert werden, es kann aber auch ein auf dem Puffertisch 32 liegendes Werkstück in einer Richtung vom Zuführtisch 12 weg bewegt werden. Vorzugsweise können die beiden genannten Segmente der dritten Fördereinrichtung unabhängig voneinander angetrieben werden.

Wie beispielsweise aus der Draufsicht der Figur 2 ersichtlich ist, ist die Basis 26 des Roboters 24, in Förderrichtung 19 der ersten Fördereinrichtung 18 gesehen, seitlich von der durch eine strichpunktierte Linie angedeuteten Aufteillinie 14 und in Verlängerung zur Aufteillinie 14 und unmittelbar benachbart zu dieser angeordnet. Bei einer nicht gezeigten Ausführungsform ist die Basis des Roboters über der Aufteillinie angeordnet, wobei in diesem Fall eine Anordnung nicht exakt in der Mitte der Aufteillinie, sondern etwas zum Winkellineal hin verschoben bevorzugt ist. Denkbar ist auch eine Anordnung der Basis des Roboters lediglich in der Nähe der Aufteillinie über dem Zuführtisch oder über dem Entnahmetisch.

Zu der Plattenaufteilanlage 10 gehört auch ein tischartiges Zwischenlager 40, welches in der Draufsicht der Figur 2 seitlich vom Roboter 24 ungefähr in Verlängerung der Aufteillinie 14 angeordnet ist. Außerdem umfasst die Plattenaufteilanlage 10 eine Abtransporteinrichtung in Form einer Rollenbahn 42, an deren seitlichem Rand eine Etikettiereinrichtung 44 angeordnet ist.

Die Abtransporteinrichtung 42 ist vorliegend seitlich vom Entnahmetisch 16 angeordnet, in der Draufsicht der Figur 2 also "südlich" vom Roboter 24. Ein weiteres Zwischenlager 45 ist oberhalb von der Aufteillinie 14 angeordnet (siehe beispielsweise Figur 1). Es erstreckt sich mindestens in etwa in Längsrichtung der Aufteillinie 14. Das weitere Zwischenlager 45 ist also oberhalb von einem Druckbalken (nicht sichtbar) angeordnet, der ein Werkstück während des Aufteilvorgangs am Maschinentisch der Aufteileinrichtung festlegt.

In den Draufsichten der 9 bis 18 ist ein Arbeitsbereich des Roboters 24 durch einen gestrichelten Kreis 46 angedeutet. Unter dem Arbeitsbereich 46 wird jener Bereich verstanden, in dem dort liegende Werkstücke vom Roboter 24 ergriffen und/oder abgelegt und/oder transportiert werden können. Der Arbeitsbereich 46 ist also ein dreidimensionaler Raumbereich, der näherungsweise die Form einer Halbkugel hat. Man erkennt, dass der in den Draufsichten rechte obere Teilbereich des Entnahmetisches 16, der rechte untere Teilbereich des Zuführtisches 12, der linke untere Teilbereich des Puffertisches 32, der linke Teilbereich des Zwischenlagers 40, und der obere Teilbereich der Abtransporteinrichtung 42 vom Arbeitsbereich 46 des Roboters 24 überdeckt werden. Der Arbeitsbereich 46 des Roboters 24 deckt somit jene Bereiche der Plattenaufteilanlage 10, die zu beiden Seiten der Aufteillinie 14 liegen, gleichermaßen gut ab, so dass der Roboter 24 beinahe beliebig Werkstücke zwischen den oben aufgezählten fünf Teilbereichen hin und her transportieren kann.

Dies hängt auch damit zusammen, dass die Basis 26 des Roboters 24 in der Nähe zu bzw. in der vorliegenden Ausführungsform sogar unmittelbar benachbart zu einem Winkellineal 48 angeordnet ist, welches sich in den Draufsichten der Figuren 2 sowie 9 bis 18 am rechten Rand des Zuführtisches im Bereich der Aufteillinie 14 parallel zur Förderrichtung 19 der ersten Fördereinrichtung 18 erstreckt und an dem ein zu bearbeitendes Werkstück angelegt und hierdurch ausgerichtet werden kann.

Nun wird auf Figur 5 Bezug genommen, welche etwas stärker detailliert die Anordnung der Basis 26 des Roboters 24 zeigt: die Basis 26 des Roboters 24 steht auf einer Tragstruktur 50, die vorliegend auch als Ständerung bezeichnet werden kann, und die vorliegend vier Beine 52 umfasst. Unmittelbar unterhalb von der Basis 26 ist ein Bahnhof 54 für einen in den Figuren nicht sichtbaren Sägewagen der Aufteilsäge angeordnet. Man erkennt, dass die Ständerung 50 mit den Beinen 52 eine von dem Bahnhof 54 getrennte Struktur bildet, die selbstständig auf einem Boden steht, wodurch diese Ständerung 50 von sämtlichen anderen Strukturen der Plattenaufteilanlage 10, so auch von der Aufteileinrichtung, vollständig entkoppelt ist, so das Schwingungen, die im Betrieb des Roboters 24 von diesem verursacht werden, nicht auf die Aufteileinrichtung übertragen werden können.

In Figur 5 ist das weitere Zwischenlager 45 nicht gezeichnet, und auch der unterhalb von dem weiteren Zwischenlager 45 angeordnete Druckbalken ist in Figur 5 nicht gezeigt. Hierdurch ist der Blick frei auf einen Maschinentisch 55, der auf seiner Oberseite eine Vielzahl von Luftaustrittsdüsen aufweist, die durch schwarze Punkte dargestellt sind. Dort, wo die Luftaustrittsdüsen besonders nahe zueinander liegen, befindet sich in der Oberseite des Maschinentischs 55 ein Sägespalt, aus dem bei einem Sägevorgang ein Sägeblatt der Aufteilsäge nach oben hervor steht, um ein dort liegendes Werkstück aufzuteilen. Durch den Sägespalt wird die oben erwähnte Aufteillinie 14 gebildet.

Nun wird unter Bezugnahme auf die Figuren 9 bis 18 ein Verfahren zum Betreiben der Plattenaufteilanlage 10 beschrieben. Dabei trägt ein Werkstück allgemein das Bezugszeichen 56. Durch verschiedene Indizes wird nachfolgend angegeben, ob es sich um ein Teil-Werkstück nach einem ersten Aufteilvorgang (vorliegend Längsschnitt), nach einem zweiten Aufteilvorgang (vorliegend Querschnitt), oder nach einem dritten Aufteilvorgang (vorliegend Nachschnitt) handelt.

Figur 9 zeigt eine Ausgangssituation. In dieser liegt ein großformatiges plattenförmiges Werkstück 56 auf dem Zuführtisch 12. An seinem in Figur 9 oberen Rand greifen die Spannzangen 22 des Programmschiebers 20 der ersten Fördereinrichtung 18 an. Durch gestrichelte Linien wird bei dem Werkstück 56 angedeutet, wie dieses nachfolgend aufgeteilt werden soll ("Schnittplan").

Figur 10 zeigt die Plattenaufteilanlage 10, nachdem ein erster Streifen 56a mittels eines ersten Aufteilvorgangs ("Längsschnitt") abgesägt, vom Roboter 24 gegriffen, angehoben, über die Aufteillinie 14, den Druckbalken und das eventuell vorhandene weitere Zwischenlager 45 hinweg transportiert (dies ist der kürzeste und daher schnellste Weg) und auf den Puffertisch 32 abgelegt wurde. Vor dem Ablegen auf dem Puffertisch 32 wurde der Streifen 56a durch eine Drehung der Saug-Greifeinrichtung 30 um die vertikale Achse 31 so gedreht, dass er auf dem Puffertisch 32 in einer relativ zu seiner Lage auf dem Entnahmetisch 16 um 90° gedrehten Position liegt.

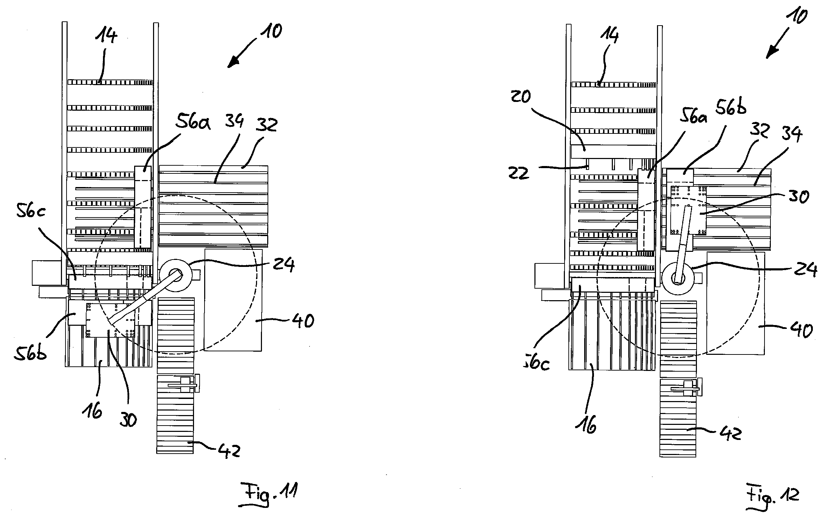

In Figur 11 wurde der erste Streifen 56a von der dritten Fördereinrichtung 34 vom Puffertisch 32 auf den Zuführtisch 12 bewegt. Ferner wurde von der Säge das Rest-Werkstück in zwei Streifen 56b und 56c aufgeteilt. Der abgetrennte und auf dem Entnahmetisch 16 liegende Streifen 56b wird von der SaugGreifeinrichtung 30 des Roboters 24 gegriffen und auf den Puffertisch 32 gelegt (Figur 12).

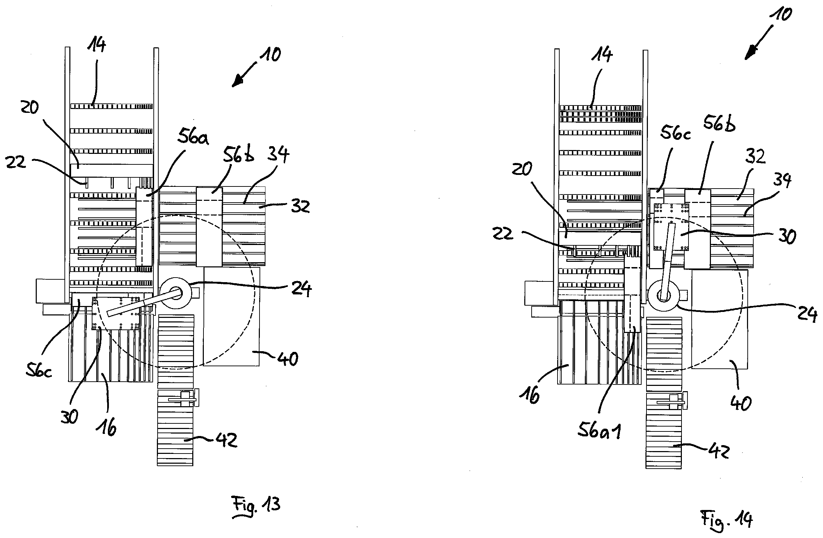

Der Streifen 56b wird von der dritten Fördereinrichtung 34 nun in einer Richtung vom Zuführtisch 12 weg bewegt, so das eine Lücke zwischen dem Streifen 56b und dem Zuführtisch 12 geschaffen wird. In diese Lücke legt der Roboter 24 nun den dritten Streifen 56c, den er zuvor vom Entnahmetisch 12 abgeholt hat (Figuren 13 und 14). Obwohl der Streifen 56c im Ausgangswerkstück 56 hinter dem Streifen 56b lag, liegt er nun, zum Zuführtisch 12 hin gesehen, vor dem Streifen 56b.

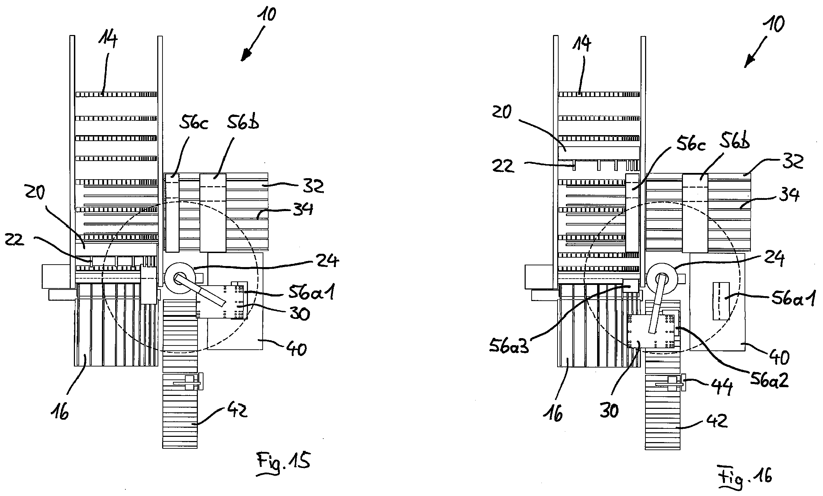

Während dessen wird der auf dem Zuführtisch 12 liegende Streifen 56a am Winkellineal 48 und den oben erwähnten, in der Zeichnung aber nicht dargestellten Ausrichtanschlägen ausgerichtet und von den Spannzangen 22 des Programmschiebers 20 gegriffen, in Richtung der Aufteillinie 14 bewegt und dort mittels eines zweiten Aufteilvorgangs ("Querschnitt") aufgeteilt, wodurch ein abgetrenntes neues Werkstück 56a1 entsteht. Dieses wird, wie aus Figur 15 ersichtlich ist, von der Saug-Greifeinrichtung 30 des Roboters 24 auf dem Entnahmetisch 16 abgeholt und auf das Zwischenlager 40 gelegt. Während dessen wird das Rest-Werkstück 56a von der ersten Fördereinrichtung 18 weiter vorgeschoben und in zwei Werkstücke 56a2 und 56a3 aufgeteilt.

Das Werkstück 56a2 wird vom Roboter 24 auf dem Entnahmetisch 16 abgeholt und auf die Abtransporteinrichtung 42 gelegt (Figur 16). Während des Transports zur Abtransporteinrichtung 42 dreht der Roboter 24 das Werkstück 56a2 und/oder das Werkstück 56a3 erforderlichenfalls um die vertikale Achse 31 so, dass es in einer gewünschten Orientierung (beispielsweise für die Etikettierung oder die Abstapelung) auf der Abtransporteinrichtung 42 zum Liegen kommt. Gleiches geschieht anschließend mit dem Werkstück 56a3. Dort werden die Werkstücke 56a2 und 56a3 von der Etikettiereinrichtung 44 mit einem Etikett beklebt und anschließend abtransportiert, beispielsweise zu einem Abstapelplatz. Während dessen transportiert die dritte Fördereinrichtung 34 das auf dem Puffertisch 32 liegende Werkstück 56c auf den Zuführtisch 12.

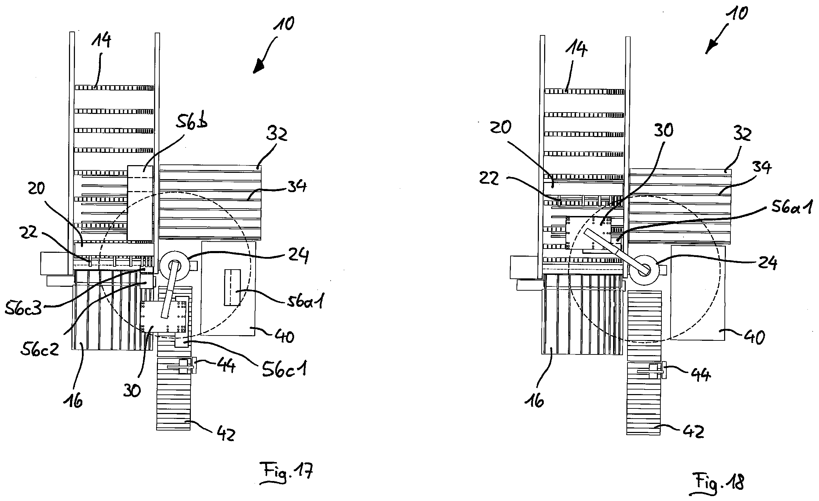

Aus Figur 17 ist ersichtlich, wie das Werkstück 56c in drei Werkstücke 56c1, 56c2 und 56c3 aufgeteilt wird. Diese werden alle vom Roboter 24 nach dem Aufteilen auf dem Entnahmetisch 16 abgeholt und auf die Abtransporteinrichtung 42 gelegt. Während dessen wird das Werkstück 56b von der dritten Fördereinrichtung 34 auf den Zuführtisch 12 bewegt, vom Programmschieber 20 der Aufteileinrichtung zugeführt und längs der Aufteillinie 14 aufgeteilt. Die aufgeteilten Werkstücke werden dann ebenfalls vom Roboter 24 vom Entnahmetisch 16 abgeholt und auf die Abtransporteinrichtung 42 gelegt, was in Figur 17 jedoch nicht mehr dargestellt ist. Auf der Abtransporteinrichtung 42 werden die abtransportierten Werkstücke, wie oben bereits erwähnt, von der Etikettiereinrichtung 44 mit einem Etikett bedruckt, welches die jederzeitige Identifizierung der Werkstücke ermöglicht.

Schließlich wird das auf dem Zwischenlager 40 liegende Werkstück 56a1 vom Roboter 24 mit der Saug-Greifeinrichtung 30 abgeholt und direkt auf den Zuführtisch 12 gelegt, zuvor jedoch noch um die vertikale Achse 31 um 90° gedreht. Dieser Zustand ist in Figur 18 dargestellt. Das Werkstück 56a1 wird dann vom Programmschieber 20 der Aufteillinie 14 zugeführt und von der Säge nochmals mittels eines dritten Aufteilvorgangs ("Nachschnitt") aufgeteilt. Das hierdurch abgetrennte Werkstück wird vom Roboter 24 entnommen und - gegebenenfalls nach einer Drehung um die vertikale Achse 31 um 90° im oder entgegen dem Uhrzeigersinn - auf die Abtransporteinrichtung 42 gelegt, was in der Zeichnung jedoch nicht mehr dargestellt ist. Das noch im Bereich der Aufteillinie 14 verbliebene Reststück wird nicht vom Roboter 24 entnommen sondern fällt mittels einer beweglichen Abfallklappe 61 in einen Abfallschacht. Die Abfallklappe 61 ist im zur Aufteillinie 14 benachbarten Bereich des Entnahmetisches 16 angeordnet.

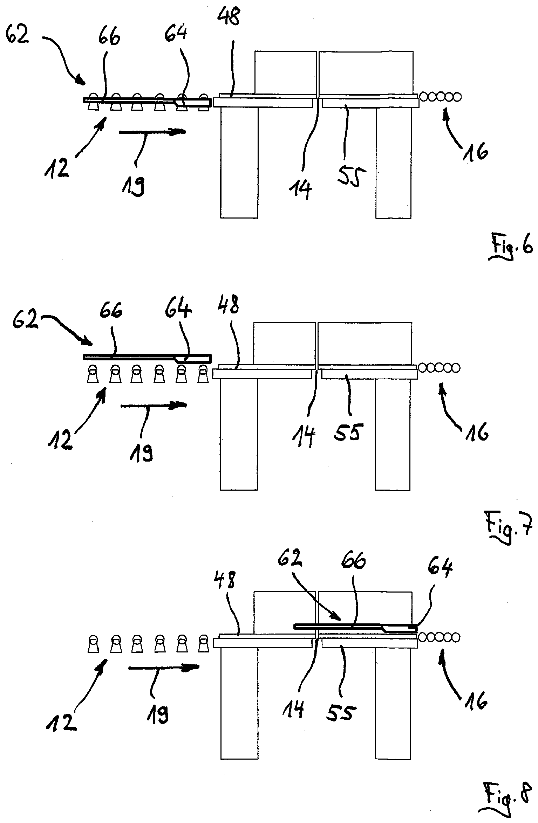

Die Plattenaufteilanlage 10 weist eine Ausschubvorrichtung 62 auf, welche nun unter Bezugnahme auf die Figuren 6 bis 8 erläutert wird. Sie umfasst einen Schieber 64, der an einem Schlitten 66 beweglich gehalten und in der in Figur 6 gezeigten Ruhelage nach unten aus der Ebene des Zuführtisches 12 heraus geschwenkt ist. Um ein Werkstück 56 ausschieben zu können, wird, wie aus Figur 7 ersichtlich ist, der Schieber 64 nach oben knapp über die Ebene des Zuführtisches 12 geschwenkt und dann der Schlitten 66 längs zur ersten Förderrichtung 19 zur Aufteillinie 14 hin bewegt (Figur 8). Hierdurch wird das Werkstück 56 oder ein Abfallstück von der Aufteillinie 14 weg geschoben.

Wie beispielsweise aus Figur 3 ersichtlich ist, weist bei der in der Zeichnung gezeigten Plattenaufteilanlage 10 der Roboter 24 einen Roboterarm 28 auf, der mit der Basis 26 an einer Verbindungsstelle 58 gelenkig verbunden ist. Diese Verbindungsstelle 58 liegt bei der gezeigten Ausführungsform deutlich oberhalb von einer Oberseite 60 des Entnahmetisches 16. In einer nicht gezeigten Ausführungsform ist die besagte Verbindungsstelle tiefer angeordnet, so dass sie in etwa auf gleicher Höhe liegt wie die Oberseite des Zuführtisches. Dies hat den Vorteil, dass der Arbeitsbereich des Roboters nochmals vergrößert wird.

Wie oben erwähnt, weist die gezeigte Plattenaufteilanlage 10 ein zusätzliches Zwischenlager 45 auf, welches oberhalb von der Aufteillinie 14 angeordnet ist. Bei dem oben beschriebenen Verfahren kam dieses zusätzliche Zwischenlager 45 nicht zum Einsatz. Bei komplexeren Schnittplänen können jedoch auch auf dem Zwischenlager 45 abgetrennte Werkstücke zwischengelagert werden. Alternativ kann das Zwischenlager 45 auch anstelle des neben dem Roboter 24 vorhandenen Zwischenlagers 40 und/oder auch anstelle der Puffereinrichtung 32 eingesetzt werden, wodurch der für die Aufstellung der Plattenaufteilanlage 10 benötigte Platz reduziert wird. Auch ist denkbar, einen Puffertisch oberhalb vom Zuführtisch 12 anzuordnen.

## Patentansprüche

1. Plattenaufteilanlage (10) zum Aufteilen von plattenförmigen Werkstücken (56), mit
- einem Zuführtisch (12),
- einer Aufteileinrichtung mit einer Aufteillinie (14),
- einem Entnahmetisch (16),
- mindestens einer ersten Fördereinrichtung (18), mit der ein auf dem Zuführtisch (12) liegendes Werkstück (56) in Richtung zur Aufteillinie (14) hin bewegt werden kann, wobei die Aufteileinrichtung mit der Aufteillinie (14) in einer ersten Förderrichtung (19) der ersten Fördereinrichtung (18) gesehen zwischen Zuführtisch (12) und Entnahmetisch (16) angeordnet ist, und
- mindestens einer zweiten Fördereinrichtung (23), die einen Roboter (24) umfasst, der eine Basis (26) und einen Arbeitsbereich (46) aufweist, welcher in einer Draufsicht mindestens zum Teil einen Bereich des Entnahmetisches (16) überdeckt.

2. Plattenaufteilanlage (10) nach Anspruch 1, **dadurch gekennzeichnet, dass** die Basis (26) des Roboters (24), in Förderrichtung (19) der ersten Fördereinrichtung (18) gesehen, seitlich von der Aufteillinie (14) und mindestens in der Nähe zu der Aufteillinie (14) und/oder einem Winkellineal (48) angeordnet ist, oder dass die Basis des Roboters wenigstens in etwa über der Aufteillinie angeordnet ist.

3. Plattenaufteilanlage (10) nach einem der vorhergehenden Ansprüche, **dadurch gekennzeichnet, dass** die Basis (26) des Roboters (24) in der Draufsicht in Verlängerung zur Aufteillinie (14) angeordnet ist.

4. Plattenaufteilanlage (10) nach einem der vorhergehenden Ansprüche, **dadurch gekennzeichnet, dass** der Arbeitsbereich (46) des Roboters (24) auch oberhalb von der Aufteillinie (14) liegt.

5. Plattenaufteilanlage (10) nach einem der Ansprüche 2-4, **dadurch gekennzeichnet, dass** die Basis (26) des Roboters (24) oberhalb von einem Bahnhof (54) der Aufteileinrichtung angeordnet ist.

6. Plattenaufteilanlage (10) nach einem der vorhergehenden Ansprüche, **dadurch gekennzeichnet, dass** die Basis (26) des Roboters (24) eine Ständerung (50) aufweist, die mindestens von der Aufteileinrichtung entkoppelt ist.

7. Plattenaufteilanlage (10) nach einem der vorhergehenden Ansprüche, **dadurch gekennzeichnet, dass** der Roboter (24) einen Roboterarm (28) und eine an dessen Ende angeordnete plattenförmige, im Wesentlichen horizontale SaugGreifeinrichtung (30) aufweist, welche ein plattenförmiges Werkstück (56) an seiner Oberseite greifen kann.

8. Plattenaufteilanlage (20) nach Anspruch 7, **dadurch gekennzeichnet, dass** die Saug-Greifeinrichtung exzentrisch an dem Roboterarm angeordnet ist und/oder das Saugeinrichtungen (29) asymmetrisch an der SaugGreifeinrichtung (30) verteilt angeordnet sind.

9. Plattenaufteilanlage (10) nach einem der Ansprüche 7 oder 8, **dadurch gekennzeichnet, dass** die Saug-Greifeinrichtung (30) gegenüber dem Roboterarm (28) um eine vertikale Achse (31) drehbar ist.

10. Plattenaufteilanlage (10) nach einem der vorhergehenden Ansprüche, **dadurch gekennzeichnet, dass** der Roboter (24) einen Roboterarm (28) aufweist, der mit der Basis (26) an einer Verbindungsstelle (58) gelenkig verbunden ist, wobei die Verbindungsstelle (58) in etwa auf gleicher Höhe oder etwas höher liegt wie eine Oberseite des Zuführtisches und/oder eine Oberseite (60) des Entnahmetisches (16).

11. Plattenaufteilanlage (10) nach einem der vorhergehenden Ansprüche, **dadurch gekennzeichnet, dass** sie eine Puffereinrichtung (32) umfasst, die seitlich vom Zuführtisch (12) angeordnet ist, und dass sie eine dritte Fördereinrichtung (34) aufweist, die der Puffereinrichtung (32) zugeordnet ist, deren Förderrichtung (38) in einem Winkel, vorzugsweise orthogonal zur Förderrichtung (19) der ersten Fördereinrichtung (18) liegt derart, dass ein Werkstück (56) von der Puffereinrichtung (32) auf den Zuführtisch (12) gefördert werden kann, wobei die Puffereinrichtung (32) mindestens zum Teil im Arbeitsbereich (46) des Roboters (24) liegt.

12. Plattenaufteilanlage (10) nach Anspruch 11, **dadurch gekennzeichnet, dass** die Puffereinrichtung (32) durch die dritte Fördereinrichtung (34) gebildet wird.

13. Plattenaufteilanlage (10) einem der Ansprüche 11 oder 12, **dadurch gekennzeichnet, dass** die dritte Fördereinrichtung (34) so ausgebildet ist, dass ein auf der Puffereinrichtung (32) liegendes Werkstück (56) vom Zuführtisch (12) zumindest auch weg gefördert werden kann und/oder sie sowohl im Bereich der Puffereinrichtung (32) als auch im Bereich des Zuführtisches (12) angeordnet ist.

14. Plattenaufteilanlage (10) nach einem der Ansprüche 11-13, **dadurch gekennzeichnet, dass** die dritte Fördereinrichtung (34) eine Mehrzahl von Fördersegmenten umfasst, insbesondere einen Riemenförderer (36), eine Rollenbahn, ein Transportband, einen Schieber, und/oder einen Kettenförderer umfasst.

15. Plattenaufteilanlage (10) nach einem der vorhergehenden Ansprüche, dass sie ein Zwischenlager (40) umfasst, das seitlich vom Roboter (24) ungefähr in Verlängerung der Aufteillinie (14) und mindestens zum Teil im Arbeitsbereich (46) des Roboters (24) angeordnet ist.

16. Plattenaufteilanlage (10) nach einem der vorhergehenden Ansprüche, **dadurch gekennzeichnet, dass** sie ein Zwischenlager (45) umfasst, welches oberhalb von der Aufteillinie (14) angeordnet ist und sich vorzugsweise in etwa in Längsrichtung der Aufteillinie (14) erstreckt.

17. Plattenaufteilanlage (10) nach einem der vorhergehenden Ansprüche, **dadurch gekennzeichnet, dass** sie eine Abtransporteinrichtung (42) umfasst, die mindestens zum Teil im Arbeitsbereich (46) des Roboters (24) liegt und mit der ein fertiges Werkstück abtransportiert werden kann.

18. Plattenaufteilanlage (10) nach einem der vorhergehenden Ansprüche, **dadurch gekennzeichnet, dass** sie eine weitere Bearbeitungseinrichtung, insbesondere eine Etikettiereinrichtung (44), umfasst, die im Bereich einer Abtransporteinrichtung (42), einer Puffereinrichtung, insbesondere einer Puffereinrichtung mit einer ihr zugeordneten Fördereinrichtung, des Zuführtisches, oder des Entnahmetisches angeordnet ist.

19. Plattenaufteilanlage (10) nach einem der vorhergehenden Ansprüche, **dadurch gekennzeichnet, dass** sie eine Ausschubvorrichtung (62) umfasst, mit der ein aufgeteiltes Werkstück von der Aufteillinie (14) auf den Entnahmetisch (16) und/oder ein Abfallstück in einen Entsorgungsbereich geschoben werden kann.

20. Plattenaufteilanlage (10) nach einem der vorhergehenden Ansprüche, **dadurch gekennzeichnet, dass** sie eine Erfassungseinrichtung, insbesondere eine Bilderfassungseinrichtung, zur Erfassung der Position und/oder Lage eines Werkstücks mindestens innerhalb eines Bereichs der Plattenaufteilanlage umfasst.

21. Plattenaufteilanlage (10) nach einem der vorhergehenden Ansprüche, **dadurch gekennzeichnet, dass** der Arbeitsbereich (46) in einer Draufsicht ferner mindestens zum Teil einen Bereich seitlich vom Zuführtisch (12) und/oder mindestens zum Teil einen Bereich des Zuführtisches (12) überdeckt.

22. Verfahren zum Betreiben einer Plattenaufteilanlage (10) nach einem der vorhergehenden Ansprüche, **dadurch gekennzeichnet, dass** es mindestens folgende Schritte umfasst:
a. Bewegen eines auf dem Zuführtisch (12) liegenden Werkstücks (56) mit einer ersten Fördereinrichtung (18) in Richtung zur Aufteillinie (14) hin, wobei die Aufteileinrichtung mit der Aufteillinie (14) in einer ersten Förderrichtung (19) der ersten Fördereinrichtung (18) gesehen zwischen Zuführtisch (12) und Entnahmetisch (16) angeordnet ist,
b. Überdecken in einer Draufsicht mindestens zum Teil eines Bereichs des Entnahmetisches (16) durch einen Arbeitsbereich (46) eines Roboters (24), der eine Basis (26) und den besagten Arbeitsbereich (46) aufweist und von einer zweiten Fördereinrichtung (23) umfasst wird.
